# EUROPEAN PATENT SPECIFICATION

(11) **EP 1 350 409 B1**
(45) Date of publication and mention of the grant of the patent: **29.07.2009**
(21) Application number: 01271025.7
(22) Date of filing: 10.12.2001
(51) Int. Cl.: G08G 1/123

(54) **SUPERVISION OF MOBILE UNITS**
ÜBERWACHUNG MOBILER EINHEITEN
SURVEILLANCE D'UNITES MOBILES

(30) Priority: 15.12.2000 SE 0004663
(43) Date of publication of application: 08.10.2003
(73) Proprietor: Multicom Security AB, 117 43 Stockholm (SE)
(72) Inventor: HÖGDAHL, Johan, S-182 76 Stocksund (SE); SALONEN, Jarmo, S-194 41 Upplands Väsby (SE); ENBLOM, Börje, S-135 50 Tyresö (SE)
(74) Representative: Lundqvist, Alida Maria Therése
(86) International application number: PCT/SE2001/002721
(87) International publication number: WO 2002/049390

(56) References cited:
- US-A- 5 208 756
- US-A- 5 432 841
- US-A- 5 895 436

## Description

### FIELD OF THE INVENTION

The present invention relates to a system for supervision of mobile units and especially such a system which gives alarm at broken connection. Further is related to a system which, in addition to giving alarm and position indications by means of an ordinary communication connection, for instance when the mobile unit is moved from a position, also can give alarm and position indications/information by means of an alternative communication connection when the ordinary connection with the mobile unit is broken.

### BACKGROUND OF THE INVENTION

Systems for supervision of mobile objects are today of frequent occurrence. By WO A1 98/10538, for instance a system to find/appoint the position of mobile units is known. To get an accurate a position as possible, signals from base stations from a plurality of operators are utilized in this system. Further, the status of the mobile units can be polled and alarm can be transmitted if an object is moving outside an in advance determined area.

Further, FR,A1,2756083 announces a system for supervision of mobile units by means of GSM *(GSM, Global System for Mobile Communications)*, and by DE,A1,19733579 a system is known where position data obtained by means of for instance GPS *(GPS, Global Positioning system)* are transmitted from a mobile unit by means of GSM or other type of radio communication to a remotely/at a distance located control unit.

Regarding systems for supervision of mobile units and communication systems we also want to refer to US,A,5,969,595; US,A,4,990,890; EP,A2,921511; JP,A,63-283239; US,A,5,465,388; WO,A2,98/48576; US,A,5,742,904; US,A,5,890,061; US,A,5,880,868; AU,A,9656035 and WO,A1,99/41723.

A system for tracking of mobile units via a cellular network is known from US,A,5,895,436. Said system comprises a security service provider, which is connected by means of a communication connection to mobile units. Said tracking system is arranged to send paging requests to update the locations of said mobile units.

A problem with the supervision systems of today, however, is that they cannot transmit alarm when the original connection between the supervised object and an alarm device is broken.

One aim of the present invention consequently is to provide a supervision/surveillance system which solves the above mentioned problems, that is, a system by which alarm and position indications/information can be transmitted even if the original communication connection/link does no longer exist.

### SUMMARY OF THE INVENTION

The present invention relates to a system for supervision of mobile objects, and especially such a system which gives alarm if the first original connection with the supervised object is broken, and especially such a system which can transmit alarm and position indications/information even if the first original connection with the mobile object is lost.

One embodiment of the present invention is defined by the features of the independent system claim 1.

In another embodiment of the system according to the invention, the system includes a second communication connection which is arranged to connect said mobile unit and said alarm server, and at which the system is arranged to provide communication between said mobile unit and said alarm server, by means of said second connection, when said first connection is broken.

### BRIEF DESCRIPTION OF A DRAWING

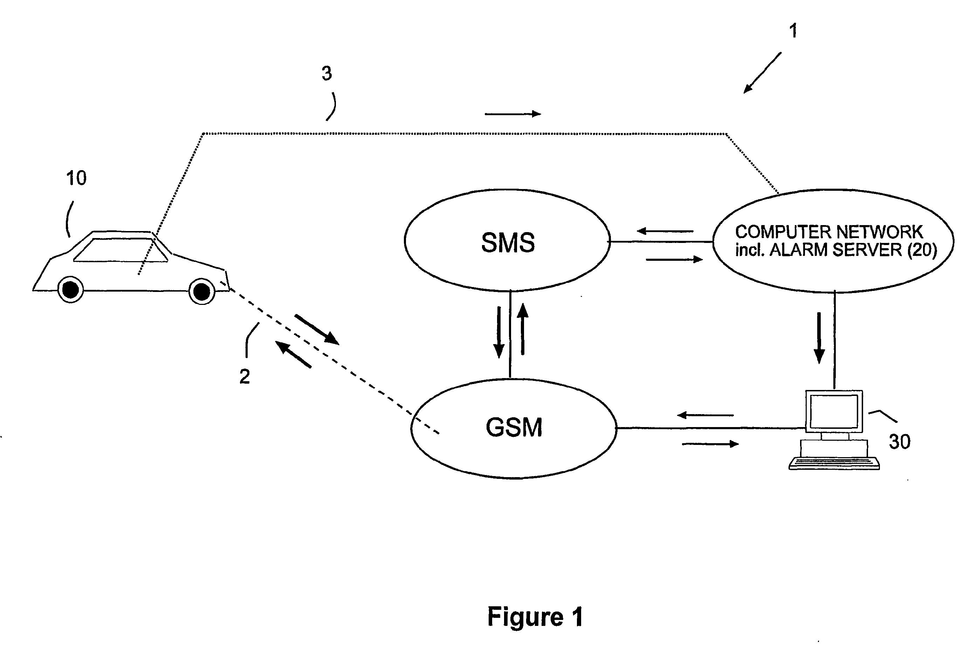

The system according to the present invention will be described in more detail with reference to a drawing, in which
Figure 1 shows an exemplifying embodiment of the system according to the invention.

### DETAILED DESCRIPTION OF THE INVENTION

The present invention relates to a system, and especially such a system which gives alarm if a connection with a supervised unit is broken, and more exactly a system which, in addition to the first ordinary communication path between the supervised unit and an alarm receiver, also includes a second alternative communication path between said unit and said receiver. By means of said second alternative communication path, alarm and position indications consequently can be transmitted between the supervised unit and the alarm receiver even if the first ordinary communication path is broken.

The system according to the invention will be described in more details with reference to Figure 1. The system 1 includes a data and telecommunication network, which network includes a first ordinary communication path 2, by means of which path 2 an alarm unit (not shown) arranged at a supervised unit 10 is, from a communication point of view, connection/linked with an alarm server 20 included in said data and telecommunication network. Further, said alarm server 20 is,'from a communication point of view, connected/linked to one or more alarm receivers 30. Preferably said communication network includes at least one global network for mobile communication, such as a GSM-network and/or a radio network.

In one embodiment, the alarm unit further includes devices by means of which the alarm unit is arranged to find/appoint the position of the mobile unit 10. The positioning/position finding is done by means of base stations existing in the GSM-network, by means of GPS or any other navigation system. The alarm unit further is arranged for communication with the alarm server 20 by means of the ordinary GSM-connection/link 2.

In another embodiment of the system according to the present invention, the alarm unit is, from a communication point of view, connected with the alarm server 20 by means of both the first ordinary connection/link 2 and a second alternative communication connection/link 3, which for instance is another GSM-connection/link or any other radio connection/link in a radio system, such as a connection/link by means of communication radio. At which the geographical position of the mobile unit 10 is available by means of radio transmission. Preferably said radio system is arranged at strategic places, such as at the frontier crossings of countries and entrances and exits of harbors.

The alarm server polls regularly the alarm unit regarding the status of the mobile unit 10, which status can include information about that the connection/link between the mobile unit 10 and the alarm server 20 is intact and/or the status can include the according to the above mentioned found position. Further, said polling is done regularly by means of the ordinary connection/link 2. In the existing GSM-network the polling can be done by means SMS *(SMS, Short Message Service)*, GPRS *(GPRS, General Packet Radio Service)* or UMTS *(UMTS, Universal Mobile Telecommunications System)* from an Internet-connected/ linked alarm server 20. At for instance polling by means of SMS, the alarm server 20 transmits an SMS-message via the GSM-network to the alarm unit included in the mobile unit 10. A not coming off poll answer results in that the alarm server 20 transmits an alarm to one or more in advance defined alarm receivers 30, at which the alarm receiver 30 receives a message about that the connection/link with the mobile unit 10 in question has been broken. The alarm further can be transmitted to a plurality of alarm receivers 30 via GSM, pager, fax, Internet-connected/linked PC and WAP-equipment *(WAP, Wireless Application Protocol)*, at which the alarm receiver/receivers 30 after that can take suitable action.

The alarm unit included in the system according to the invention further is arranged to receive position indications from position giving/providing systems which are not depending on a kept up GSM-connection/link 2; thus the position of the mobile unit 10 can be received even if the GSM-connection/link is broken. The coordinates of the position of the mobile unit 10 then can be transmitted via the second alternative communication path 3 to the alarm server 20, at which said alarm server 20 forwards the alarm and/or the position to one or more receivers 30. The alarm server 20 can, for instance, transmit the alarm to a receiver 30 via said communication network and the position to another receiver 30 via GSM, pager, fax, WAP-equipment and/or computer, for instance a personal computer, preferably an Internet-connected/linked computer. In the system according to the invention, further an alarm receiver 30 can communicate with the alarm unit in the mobile unit 10 by means of the first GSM-connection/link 2.

At supervision of the mobile unit 10, for instance a parked car, the alarm server 10 can save the position of the car in a storing medium, such as a database (not shown). Further, the owner of the car can, for instance, activate the supervision function of the system 1, at which the owner will be alarmed in wanted way if the car is moved from its parked position. When the owner returns to the car a little later, he/she just has to deactivate the alarm before he/she drives off again. In this way the alarm server 20 can, when the alarm is activated, poll the status of the car, and if the geographical position of the car is changed, as in the case of a car theft, the alarm server 20 alarms one or more receivers 30. By means of the system according to the invention, the owner of the car, for instance, will be alarmed if the connection/link between the car and the alarm server is broken. At which the owner of the car can take suitable measures, such as to go to his/her car himself/herself, or call for a security company if suspicion of crime exists.

In Figure 1 a mobile unit 10 is shown in form of a car, but it should be realized that the mobile unit 10 can consist of just any movable unit, such as a boat, a bicycle or a computer.

## Claims

1. A system (1) for supervision of mobile units (10) via a data and telecommunication network, said system comprising an alarm server (20) being connected to a least one mobile unit (10) by means of a first communication connection (2), and said alarm server (20) being arranged to regularly poll the status of said mobile unit (10),
**characterized in that** the alarm server (20) is arranged to transmit an alarm to at least one alarm receiver (30) when the alarm server (20) does not receive any status answer from the mobile unit (10) upon being polled, the alarm receiver (30) is arranged to indicate that the connection has been broken, and the system (1) further includes a second communication connection (3) which is arranged to connect said mobile unit (10) and said alarm server (20), the communication between said mobile unit (10) and said alarm server (20) being done by means of said second connection (3) when said first connection (2) has been broken.

2. System as claimed in claim 1,
**characterized in, that** said first connection (2) consists of a first GSM-connection (2).

3. System as claimed in claim 1,
**characterized in, that** said second connection (3) consists of a second GSM-connection (3).

4. System as claimed in claim 1,
**characterized in, that** said second connection (3) consists of another radio connection (3) existing in a radio system.

## Patentansprüche

1. System (1) zur Überwachung mobiler Einheiten (10) über ein Daten- und Telekommunikationsnetzwerk, wobei das System einen Alarmserver (20) umfasst, der mittels einer ersten Kommunikationsverbindung (2) mit wenigstens einer mobilen Einheit (10) verbunden ist, und wobei der Alarmserver (20) eingerichtet ist zum regelmäßigen Abrufen des Status der mobilen Einheit (10),
**dadurch gekennzeichnet, dass** der Alarmserver (20) eingerichtet ist zum Übertragen eines Alarms an wenigstens einen Alarmempfänger (30), wenn der Alarmserver (20) keine Statusantwort von der mobilen Einheit (10) beim Abrufen derer empfängt, dass der Alarmempfänger (30) eingerichtet ist zum Angeben, dass die Verbindung unterbrochen worden ist, und dass das System (1) ferner eine zweite Kommunikationsverbindung (3) enthält, die eingerichtet ist zum Verbinden der mobilen Einheit (10) und des Alarmservers (20), wobei die Kommunikation zwischen der mobilen Einheit (10) und dem Alarmserver (20) mittels der zweiten Kommunikationsverbindung (3) getätigt wird, wenn die erste Kommunikationsverbindung (2) unterbrochen worden ist.

2. System wie in Anspruch 1 beansprucht,
**dadurch gekennzeichnet, dass** die erste Verbindung (2) aus einer ersten GSM-Verbindung (2) besteht.

3. System wie in Anspruch 1 beansprucht,
**dadurch gekennzeichnet, dass** die zweite Verbindung (3) aus einer zweiten GSM-Verbindung (3) besteht.

4. System wie in Anspruch 1 beansprucht,
**dadurch gekennzeichnet, dass** die zweite Verbindung (3) aus einer anderen Funkverbindung (3) besteht, die in einem Funksystem existiert.

## Revendications

1. Système (1) de supervision d'unités mobiles (10) via un réseau de données et de télécommunication, ledit système comprenant un serveur d'alarme (20) qui est connecté à au moins une unité mobile (10) à l'aide d'une première connexion de communication (2) et ledit serveur d'alarme (20) étant conçu pour interroger régulièrement l'état de ladite unité mobile (10),
**caractérisé en ce que** le serveur d'alarme (20) est conçu pour émettre une alarme vers au moins un récepteur d'alarme (30) lorsque le serveur d'alarme (20) ne reçoit pas de réponse d'état de l'unité mobile (10) après que celle-ci a été interrogée, le récepteur d'alarme (30) est conçu pour indiquer que la connexion a été rompue et le système (1) comprend en outre une seconde connexion de communication (3) qui est conçue pour connecter ladite unité mobile (10) et ledit serveur d'alarme (20), la communication entre ladite unité mobile (10) et ledit serveur d'alarme (20) étant établie à l'aide de ladite seconde connexion de communication (3) lorsque ladite première connexion (2) a été rompue.

2. Système selon la revendication 1, **caractérisé en ce que** ladite première connexion (2) consiste en une première connexion GSM (2).

3. Système selon la revendication 1, **caractérisé en ce que** ladite seconde connexion (3) consiste en une seconde connexion GSM (3).

4. Système selon la revendication 1, **caractérisé en ce que** ladite seconde connexion (3) consiste en une autre connexion radio (3) existant dans un système radio.
